# EUROPÄISCHE PATENTSCHRIFT

(11) **EP 1 703 310 B1**
(45) Veröffentlichungstag und Bekanntmachung des Hinweises auf die Patenterteilung: **26.11.2008**
(21) Anmeldenummer: 06005343.6
(22) Anmeldetag: 16.03.2006
(51) Int. Cl.: G02B 13/06, G02B 17/08

(54) **Weitwinkeloptik**
Wide angle lens
Optique à grand-angle

(30) Priorität: 19.03.2005 DE 102005012763
(43) Veröffentlichungstag der Anmeldung: 20.09.2006
(73) Patentinhaber: Diehl BGT Defence GmbH & Co.KG, 88662 Überlingen (DE)
(72) Erfinder: Krogmann, Dirk, 88690 Uhldingen (DE)
(74) Vertreter: Diehl Patentabteilung

(56) Entgegenhaltungen:
- US-A1- 2003 090 794
- PATENT ABSTRACTS OF JAPAN Bd. 2003, Nr. 08, 6. August 2003 (2003-08-06) -& JP 2003 101830 A (RICOH CO LTD), 4. April 2003 (2003-04-04)
- PATENT ABSTRACTS OF JAPAN Bd. 1998, Nr. 06, 30. April 1998 (1998-04-30) -& JP 10 054939 A (MITSUBISHI ELECTRIC CORP), 24. Februar 1998 (1998-02-24)
- PATENT ABSTRACTS OF JAPAN Bd. 2003, Nr. 12, 5. Dezember 2003 (2003-12-05) -& JP 2003 280116 A (NOHMI BOSAI LTD), 2. Oktober 2003 (2003-10-02)

## Beschreibung

Die Erfindung geht aus von einer Weitwinkeloptik mit einem Objektiv und einem gekrümmten Spiegel zur Abbildung eines Weitwinkelbilds durch das Objektiv auf einen Detektor, wobei zumindest ein weiterer Spiegel vorgesehen ist, der relativ zum Objektiv um eine von einer optischen Achse des Objektivs verschiedene Kippachse mittels eines Antriebs verkippbar angeordnet ist.

Es sind Weitwinkeloptiken zur omnidirektionalen Beobachtung von Räumen oder Rohren bekannt, bei denen ein Objektiv auf einen gekrümmten Spiegel gerichtet ist. Der gekrümmte Spiegel erlaubt die Abbildung eines Rundumbilds auf einen Detektor, der hinter dem Objektiv angeordnet ist.

Aus der JP 2003 101 830 ist eine einstufige Bildaufnahmevorrichtung bekannt, bei der ein Bildaufnahmemittel direkt auf einen gekrümmten Spiegel gerichtet ist. Weiterhin ist im zentralen Bereich des gekrümmten Spiegels ein Planspiegel vorgesehen. Ober beide Spiegel sind Bilder von Objekten mit demselben Bildaufnahmemittel machbar.

Die US 2003/0090794 offenbart ein mehrstufiges optisches System zur Aufnahme von Bildern. Dabei wird der von einem abzubildenden Objekt ausgehende Lichtfluss über eine an einem beweglichen Arm angeordnete, plane reflektierende Platte und anschließend über sechs weitere gekrümmte Spiegel auf ein Bildaufnahmemittel gelenkt.

Der Erfindung liegt die Aufgabe zugrunde, eine gattungsgemäße Weitwinkeloptik anzugeben, durch die auf einfache Weise zwei Betriebsmodi, nämlich Erzeugung eines Panoramabildes und Erzeugung eines interessierenden Ausschnitts in Vergrößerung, also räumlich höherer Auflösung, aus einem abgebildeten Panoramabild, realisierbar sind.

Diese Aufgabe wird durch eine Weitwinkeloptik der eingangs genannten Art gelöst, wobei erfindungsgemäß der gekrümmte Spiegel und der weitere Spiegel derart starr miteinander verbunden sind, dass eine gemeinsame Verkippung der Spiegel um die Kippachse durchführbar ist, wobei das Objektiv
a) in einer Position der beiden Spiegel direkt auf den gekrümmten Spiegel zur Abbildung eines Panoramabildes und
b) in einer weiteren verkippten Position der beiden Spiegel auf den weiteren verkippbaren Spiegel zur Betrachtung eines interessierenden Ausschnitts des Panoramabildes mit höherer Auflösung
gerichtet ist.

Ein Strahlengang kann vom Detektor über den verkippbaren Spiegel auf den interessierenden Ausschnitt des Panoramabilds gerichtet werden, und dieser Ausschnitt kann räumlich höher aufgelöst betrachtet werden. Die Weitwinkeloptik kann besonders einfach, preiswert und robust hergestellt werden, wenn der gekrümmte Spiegel und der verkippbare Spiegel starr miteinander verbunden sind. Durch eine Kippbewegung um die Kippachse kann dann zwischen den gewünschten Betriebsmodi gewechselt oder ein Betriebsmodus hinsichtlich eines interessierenden Panoramabilds oder Ausschnitts optimiert werden.

Durch die direkte Ausrichtung des Objektivs auf den gekrümmten Spiegel kann eine einstufige Weitwinkeloptik erreicht werden, die besonders einfach und preiswert herstellbar ist. Das Objektiv kann einen Spiegel aufweisen, der beispielsweise zwischen einem Linsenelement und dem gekrümmten Spiegel angeordnet ist. Hierbei ist das Objektiv als eine Baueinheit, mit beispielsweise einem Gehäuse, innerhalb der Weitwinkeloptik ausgebildet. Das Objektiv ist zweckmäßigerweise beweglich zum gekrümmten Spiegel angeordnet, wodurch eine Fokussierung der Abbildung auf den Detektor besonders einfach erreicht werden kann. Außerdem kann die Beweglichkeit des gekrümmten Spiegels relativ zum Objektiv eine einfache Auswahl eines gewünschten Ausschnitts aus dem Panoramabild ermöglichen.

Vorteilhafterweise ist der verkippbare Spiegel ein Planspiegel, wodurch eine einfache Bildverarbeitung eines Verifikationsbilds, also eines Bilds des interessierenden Ausschnitts aus dem Panoramabild, erreicht werden kann.

Eine Wählbarkeit des Verifikationsbilds in zwei Dimensionen kann auf besonders einfache Weise erreicht werden, wenn der verkippbare Spiegel um eine Kippachse verkippbar und um eine von der Kippachse verschiedene weitere Achse rotierbar ist. Diese Achse ist zweckmäßigerweise die optische Achse der Weitwinkeloptik.

Insbesondere sind der gekrümmte Spiegel und der verkippbare Spiegel gemeinsam beweglich an einem Bauteil angeordnet, wodurch eine einfache Bewegungsmechanik der Spiegel erreicht werden kann.

Ein einfaches Umschalten von einem panoramischen Bild zu einem Verifikationsbild und umgekehrt durch ein einfaches Umdrehen des Bauteils kann erreicht werden, wenn der gekrümmte Spiegel auf einer Vorderseite und der verkippbare Spiegel auf einer der Vorderseite abgewandten Rückseite eines Bauteils angeordnet ist.

Eine präzise und einfache Ausrichtung des Bauteils bzw. des verkippbaren Spiegels auf einen interessierenden Ausschnitt eines Panoramabilds kann durch eine Aufhängung erreicht werden, durch die das Bauteil zumindest weitgehend unwuchtfrei verkippbar ist. Hierbei ist das Bauteil um eine Verkippachse verkippbar, die durch den Gewichtsschwerpunkt oder nahe des Gewichtsschwerpunkts des Bauteils verläuft. Eine perfekte Ausbalancierung des Bauteils ist hierbei nicht notwendig. Es reicht, wenn die Unwucht derart begrenzt ist, dass maximal 15% des Gesamtgewichts des Bauteils mehr auf einer Seite der Verkippachse angeordnet sind als auf der anderen Seite. Hierdurch ist das Bauteil bereits zumindest weitgehend unwuchtfei verkippbar.

Bei einer Ausführung des Bauteils als ein Kunststoffblock kann das Bauteil besonders einfach und preiswert herstellbar und leicht und präzise zur Beschichtung mit einer Spiegelschicht schleifbar sein.

In einer bevorzugten Ausgestaltung der Erfindung umfasst die Weitwinkeloptik ein Abstandselement, das den verkippbaren Spiegel in axialer Richtung vom gekrümmten Spiegel beabstandet. Einem Untertauchen eines Spiegelteils des verkippbaren oder gekrümmten Spiegels unter eine Bewegungsmechanik kann entgegengewirkt werden. Die axiale Richtung ist hierbei senkrecht zu einer beispielsweise Planfläche oder einem Flächenelement des verkippbaren Spiegels.

In einer weiteren Ausgestaltung der Erfindung umfasst die Weitwinkeloptik einen Antrieb, durch den der verkippbare Spiegel und der gekrümmte Spiegel gegeneinander austauschbar sind. Es kann auf einfache Weise unter Beibehaltung des Blickfelds des Objektivs gewählt werden, ob ein Panoramabild über den gekrümmten Spiegel oder ein Verifikationsbild über den verkippbaren Spiegel über das Objektiv auf dem Detektor abgebildet wird,

In einer anderen vorteilhaften Weiterbildung der Erfindung wird vorgeschlagen, dass über das Objektiv gleichzeitig jeweils ein über den gekrümmten und den verkippbaren Spiegel abgebildetes Bild auf den Detektor abbildbar ist. Hierdurch kann ein Verifikationsbild unter Beibehaltung der panoramischen Erfassung der Umgebung auf den Detektor abgebildet werden.
In einer weiteren Ausführungsvariante der Erfindung ist der verkippbare Spiegel als Abplattung des gekrümmten Spiegels ausgeführt. Der gekrümmte und der verkippbare Spiegel können kompakt ineinander gefügt und beide Spiegel können preiswert hergestellt sein.

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine einstufige Weitwinkeloptik mit einem um zwei Achsen rotierbaren Bauteil mit einem gekrümmten Spiegel und einem Planspiegel,
- Fig. 2: die Weitwinkeloptik aus Figur 1, bei der das Bauteil in einer verkippten Position ist,
- Fig. 3: eine Weitwinkeloptik mit einem flacheren Bauteil, das einen Planspiegel und einen gekrümmten Spiegel umfasst,
- Fig. 4: ein weiteres, um zwei Achsen rotierbares Bauteil mit einer Abplattung als Planspiegel,
- Fig. 5: das Bauteil aus Figur 4 in einer verkippten Position und
- Fig. 6: eine Weitwinkeloptik mit einem gekrümmten Spiegel und einem relativ zum gekrümmten Spiegel beweglichen Planspiegel.

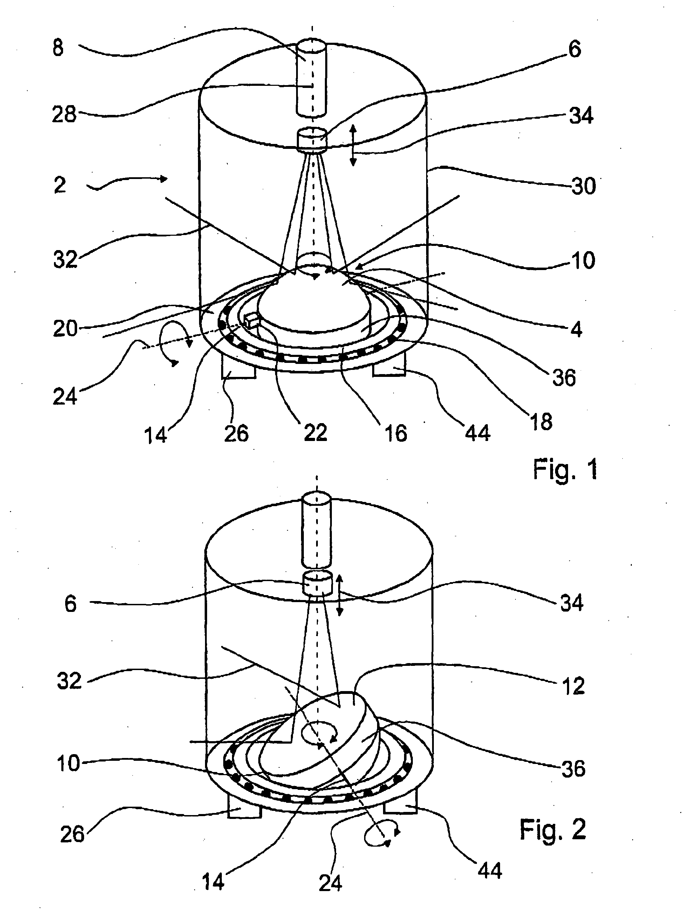

Figur 1 zeigt eine Weitwinkeloptik 2 mit einem gekrümmten Spiegel 4 und einem Objektiv 6, das direkt auf den gekrümmten Spiegel 4 gerichtet ist. Oberhalb des Objektivs 6 ist ein Detektor 8 mit einem nicht gezeigten Detektorchip mit einem Sensorfeld angeordnet. Der gekrümmte Spiegel 4 ist Teil eines Bauteils 10, auf dessen Vorderseite der gekrümmte Spiegel 4 aufgebracht ist und der an einer Rückseite einen ebenen Spiegel 12 trägt (Figur 2). Das Bauteil 10 ist ein massives, aus Kunststoff gefertigtes Bauteil und ist in einem Kardansystem beweglich gelagert. Es ist mit einer Aufhängung 14 an einem inneren Rahmen 16 befestigt, der durch ein Kugellager 18 in einem äußeren Rahmen 20 drehbar gelagert ist. Durch einen an der Aufhängung 14 angeordneten Antrieb 22 ist das Bauteil 10 um eine Kippachse 24 verkippbar. Mit einem schematisch dargestellten weiteren Antrieb 26 ist der innere Rahmen 16 im äußeren Rahmen 20 um eine optische Achse 28 der Weitwinkeloptik 2 drehbar. Um die Weltwinkeloptik 2 herum ist ein Mantel 30 aus Kunststoff angeordnet, der sowohl im sichtbaren als auch im infraroten Spektralbereich lichtdurchlässig ist. Der Mantel 30 ist in seiner Form an den äußeren Rahmen 20 angepasst, der direkt mit dem Mantel 30 verbunden, beispielsweise verschraubt ist.

In Figur 1 ist das Bauteil 10 in einer Stellung zur omnidirektionalen Beobachtung angeordnet. Ein 360°-Panorama aus der Umgebung der Weitwinkeloptik 2 wird durch einen Strahlengang 32 am gekrümmten Spiegel 4 einfach reflektiert und durch das Objektiv 6 auf dem Detektor 8 abgebildet. Der gekrümmte Spiegel 4 ist zur Abbildung eines Rundumbilds mit einem Elevationswinkelbereich von 100° sphärisch ausgestaltet. Beide Spiegel 4,12 sind auf dem Bauteil 10 aus einer Beschichtung aus Gold gebildet, wodurch eine gute Reflektion sowohl im sichtbaren als auch im infraroten Spektralbereich erreicht wird.

Zur höher auflösenden Darstellung eines Ausschnitts aus dem durch den gekrümmten Spiegel 4 abgebildeten 360°-Panorama wird das Bauteil 10 durch den Antrieb 22 verkippt und durch den Antrieb 26 um die optische Achse 28 gedreht, wie in Figur 2 gezeigt ist. Der Elevationswinkel des gewünschten Ausschnitts ist hierbei durch den Antrieb 22 und der Azimutwinkel durch den Antrieb 26 einstellbar. Nun wird der gewünschte Ausschnitt unter Beibehaltung der einfachen Reflektion auf den Detektor 8 abgebildet, jedoch nicht durch den gekrümmten Spiegel 4 reflektiert, sondern durch den ebenen Spiegel 12. Durch ein Verkippen des Bauteils 10 durch den Antrieb 22 können somit der ebene Spiegel 12 und der gekrümmte Spiegel 4 gegeneinander ausgetauscht werden, wobei das Objektiv 6 entweder direkt auf den gekrümmten Spiegel 4 oder direkt auf den ebenen Spiegel 12 gerichtet ist.

Zur Scharfstellung der Abbildung des Ausschnitts bzw. des 360°-Panoramas auf dem Detektor 8 ist das Objektiv 6 relativ zum Detektor 8 beweglich, wie durch die Pfeile 34 dargestellt ist, und zwar ist das Objektiv 6 entlang der optischen Achse 28 durch einen nicht dargestellten entsprechenden Antrieb verfahrbar. Hierdurch ist das Objektiv 6 auch relativ zum Bauteil 10 bzw. sowohl zum gekrümmten Spiegel 4 als auch zum ebenen Spiegel 12 beweglich.

Die Auflösung des interessierenden Ausschnitts aus dem 360°-Panorama ist abhängig von der Ausgestaltung des Spiegels 12. In alternativen Ausführungen kann der Spiegel 12 ebenfalls gekrümmt sein, beispielsweise leicht konkav zur Erreichung einer sehr hohen Auflösung oder leicht konvex zur Erreichung eines größeren Ausschnitts.

Zwischen dem gekrümmten Spiegel 4 und dem ebenen Spiegel 12 ist ein zylinderförmiges Abstandselement 36 angeordnet, das ein Teil des massiven Bauteils 10 ist. Die beiden Aufhängungen 14 sind so positioniert, dass die Kippachse 24 durch das Abstandselement 36 und parallel zum ebenen Spiegel 12 verläuft, und zwar durch den Gewichtsschwerpunkt des Bauteils 10, der im Abstandselement 36 ist. Somit kann das Bauteil 10 durch den Antrieb 22 im Wesentlichen kraftfrei gedreht werden. Wie in Figur 2 gezeigt ist, dient das Abstandselement 36 außerdem zur Erhöhung des ebenen Spiegels 12 über die Kippachse 24, so dass nur ein sehr kleiner Teil des ebenen Spiegels 12 in der in Figur 2 gezeigten Stellung unterhalb des inneren Rahmens 16 verbleibt und somit zur Abbildung des gewünschten Ausschnitts nicht verwendbar ist.

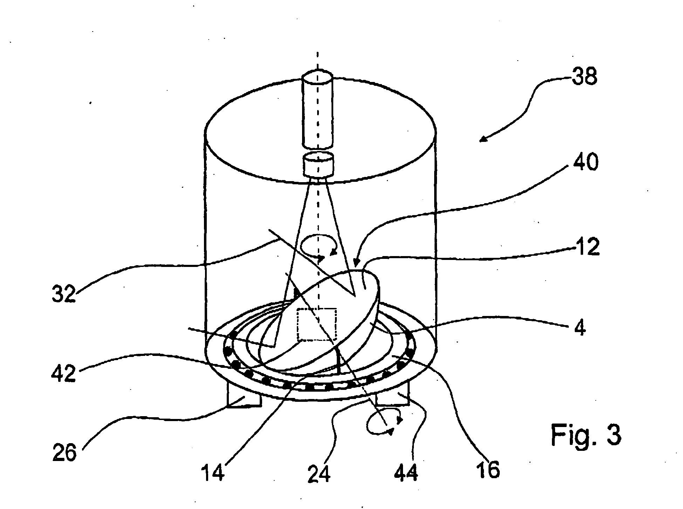

Figur 3 zeigt eine weitere Weitwinkeloptik 38 mit einem alternativen Bauteil 40. Im Wesentlichen gleich bleibende Bauteile sind grundsätzlich mit den gleichen Bezugszeichen beziffert. Ferner kann bezüglich gleich bleibender Merkmale und Funktionen auf die Beschreibung zum Ausführungsbeispiel in den Figuren 1 und 2 verwiesen werden. Die nachfolgende Beschreibung beschränkt sich im Wesentlichen auf die Unterschiede zum Ausführungsbeispiel in den Figuren 1 und 2. Das Bauteil 10 ist ein metallischer Hohlkörper mit einer gekrümmten Vorderseite, die mit dem gekrümmten Spiegel 4 beschichtet ist, und einer ebenen Rückseite, die mit dem ebenen Spiegel 12 beschichtet ist. Innerhalb des Bauteils 40 ist ein Antrieb 42 angeordnet, der zur Verkippung des Bauteils 40 um die Kippachse 24 vorgesehen ist, Das Bauteil 10 ist durch Aufhängungen 14 etwas erhöht am inneren Rahmen 16 befestigt, um eine möglichst kleine Fläche des Spiegels 12 unter den inneren Rahmen tauchen zu lassen, wie in Figur 3 dargestellt ist.

Beide Weüwinkeloptiken 2, 38 umfassen jeweils eine Steuereinheit 44, die zur Steuerung der Antriebe 22, 26, 42, zur Bewegung des Objektivs 6, zum Auslesen des Detektorchips des Detektors 8 und zur Bildverarbeitung vorgesehen ist. Durch Steuerimpulse an die Antriebe 22, 26, 42 kann die Position der Bauteile 10, 40 von der Steuereinheit 44 definiert eingestellt und fixiert werden, wobei nicht dargestellte Messsysteme, beispielsweise Wegmesser, Winkelaufnehmer oder optische Elemente, wie ein optischer "Trackbaft", die Position des Bauteils 10, 40 erfassen und entsprechende Signale an die Steuereinheit 44 übermitteln. Zusätzlich ist die Steuereinheit 44 zur synchronen Regelung der Bewegung des Objektivs 6 mit der Verkippung der Bauteile 10, 40 vorbereitet, so dass bei einem Austauschen der Spiegel 4, 12 die Position des Objektivs 6 zur Scharfstellung entsprechend angepasst wird.

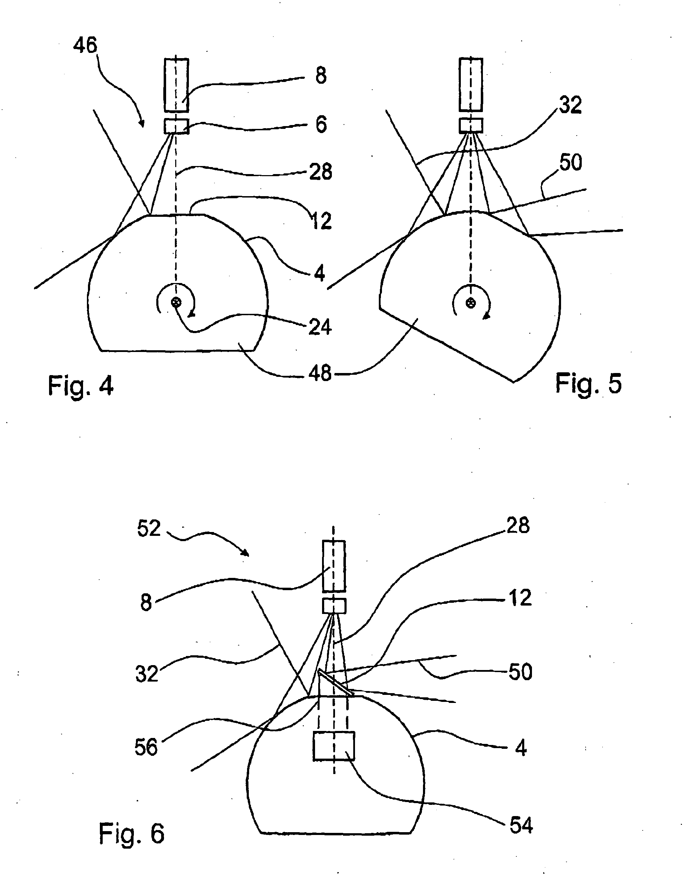

In den Figuren 4 und 5 ist in schematischer Weise eine weitere Weitwinkeloptik 46 gezeigt, deren Unterschied zu den Weitwinkeloptiken 2, 38 im Wesentlichen in einem andersartigen Bauteil 48 besteht, auf dem ein gekrümmter Spiegel 4 und ein ebener Spiegel 12 aufgebracht sind. In der in Figur 4 gezeigten Position des Bauteils 48 wird ein 360°-Panorama aus der Umgebung der Weitwinkeloptik 46 über den gekrümmten Spiegel 4 durch den Strahlengang 32 durch das Objektiv 6 auf den Detektor 8 abgebildet. Der ebene Spiegel 12 ist in dieser Position weitgehend funktionslos.

Zum Abbilden eines interessierenden Ausschnitts aus dem 360°-Panorama auf den Detektor 8 wird das Bauteil 48 um die Kippachse 24 verkippt. Hierdurch rückt der ebene Spiegel 12, der als Abplattung des gekrümmten Spiegels 4 ausgeführt ist, aus der optischen Achse 28 der Weitwinkeloptik 46 heraus und wird in eine neue Position verkippt, wie in Figur 5 dargestellt ist. Um eine zweidimensionale Beweglichkeit des Bauteils 48 zu gewährleisten, ist auch dieses in einer wie in den Figuren 1 bis 3 gezeigten kardanischen Aufhängung gelagert. über den ebenen Spiegel 12 ist nun ein Verifikationsbild über einen Strahlengang 50 durch das Objektiv 6 auf den Detektor 8 abbildbar, wobei über den Strahlengang 32 weiterhin ein Panoramabild durch das Objektiv 6 auf dem Detektor 8 abgebildet ist. In dem Panoramabild fehlt lediglich ein Ausschnitt, in dessen Mitte das Verifikationsbild mit einer hohen Auflösung angeordnet ist, Auf diese Weise ist sowohl eine panoramische Überwachung als auch das hoch aufgelöste Betrachten eines interessierenden Ausschnitts der Umgebung der Weitwinkeloptik 46 möglich.

Eine etwas aufwendigere Weitwinkeloptik 52 ist in Figur 6 gezeigt. Die Weitwinkeloptik 52 umfasst einen gekrümmten Spiegel 4 und einen ebenen Spiegel 12, der jedoch nicht starr mit dem gekrümmten Spiegel 4 verbunden ist, wie bei den Weitwinkeloptiken 2, 38, 46, sondern über einen separaten Antrieb 54 und ein Gestänge 56 separat um die optische Achse 28 drehbar und um eine senkrecht zur optischen Achse 28 angeordnete Kippachse verkippbar ist, Während mit Hilfe des gekrümmten Spiegels 4 zu jeder Zeit die 360°-Panorama-Abbildung auf den Detektor 8 abgebildet wird, kann unabhängig hiervon durch die Bewegung des ebenen Spiegels 12 ein interessierender Ausschnitt über den Strahlengang 50 ebenfalls auf dem Detektor 8 abgebildet werden. Im Gegensatz zu der Weitwinkeloptik 46 aus den Figuren 4 und 5 bleibt hierbei jedoch das vollständige Panorama-Bild erhalten, ohne dass ein Ausschnitt durch den ebenen Spiegel 12 aus dem Panorama-Bild herausgeschnitten wird.

### Bezugszeichen

- 2: Weitwinkeloptik
- 4: Spiegel
- 6: Objektiv
- 8: Detektor
- 10: Bauteil
- 12: Spiegel
- 14: Aufhängung
- 16: Rahmen
- 18: Kugellager
- 20: Rahmen
- 22: Antrieb
- 24: Kippachse
- 26: Antrieb
- 28: optische Achse
- 30: Mantel
- 32: Strahlengang
- 34: Pfeil
- 36: Abstandselement
- 38: Weitwinkeloptik
- 40: Bauteil
- 42: Antrieb
- 44: Steuereinheit
- 46: Weitwinkeloptik
- 48: Bauteil
- 50: Strahlengang
- 52: Weitwinkeloptik
- 54: Antrieb
- 56: Gestänge

## Patentansprüche

1. Weitwinkeloptik (2 38, 46) mit einem Objektiv (6) und einem gekrümmten Spiegel (4) zur Abbildung eines Weitwinkelbildes durch das Objektiv (6) auf einen Detektor (8), wobei zumindest ein weiterer Spiegel (12) vorgesehen ist, der relativ zum Objektiv (6) um eine von einer optischen Achse (28) des Objektivs (6) verschiedene Kippachse (24) mittels eines Antriebs (22, 42) verkippbar angeordnet ist,
**dadurch gekennzeichnet, dass** der gekrümmte Spiegel (4) und der weitere Spiegel (12) derart starr miteinander verbunden sind, dass eine gemeinsame Verkippung der Spiegel (4, 12) um die Kippachse (24) durchführbar ist, wobei das Objektiv (6)
a) in einer Position der beiden Spiegel (4, 12) direkt auf den gekrümmten Spiegel (4) zur Abbildung eines Panoramabildes und
b) in einer weiteren verkippten Position der beiden Spiegel (4, 12) auf den weiteren verkippbaren Spiegel (12) zur Betrachtung eines interessierenden Ausschnitts des Panoramabildes mit höherer Auflösung
gerichtet ist.

2. Weitwinkeloptik (2, 38, 46) nach Anspruch 1,
**dadurch gekennzeichnet, dass** der verkippbare Spiegel (12) ein Planspiegel ist.

3. Weitwinkeloptik (2, 38, 46) nach Anspruch 1 oder 2,
**dadurch gekennzeichnet, dass** der verkippbare Spiegel (1-2) um eine von der Kippachse (24) verschiedene weitere Achse (28) rotierbar ist.

4. Weitwinkeloptik (2, 38, 46) nach einem der vorhergehenden Ansprüche,
**dadurch gekennzeichnet, dass** der gekrümmten Spiegel (4) und der verkippbare Spiegel (12) gemeinsam beweglich an einem Bauteil (10, 40, 48) angeordnet sind.

5. Weitwinkeloptik (2, 38, 46) nach einem der vorhergehenden Ansprüche,
**dadurch gekennzeichnet, dass** der gekrümmte Spiegel (4) auf einer Vorderseite und der verkippbare Spiegel (12) auf einer der Vorderseite abgewandten Rückseite eines Bauteils (10, 40, 48) angeordnet ist.

6. Weitwinkeloptik (2, 46) nach Anspruch 5, **gekennzeichnet durch** eine Aufhängung (14), **durch** die das Bauteil (10, 48) zumindest weitgehend unwuchtfrei verkippbar ist.

7. Weitwinkeloptik (2, 46) nach einem der Ansprüche 4 bis 6,
**dadurch gekennzeichnet, dass** das Bauteil (10, 48) ein Kunststoffblock ist.

8. Weitwinkeloptik (2) nach einem der Ansprüche 4 bis 7, **gekennzeichnet durch** ein Abstandselement (36), das den verkippbaren Spiegel (12) in axialer Richtung vom gekrümmten Spiegel (4) beabstandet.

9. Weitwinkeloptik (2, 38) nach einem der vorhergehenden Ansprüche, **gekennzeichnet durch** einen Antrieb (22), **durch** den der verkippbare Spiegel (12) und der gekrümmte Spiegel (4) gegeneinander austauschbar sind.

10. Weitwinkeloptik (46) nach einem der vorhergehenden Ansprüche,
**dadurch gekennzeichnet, dass** über das Objektiv (6) gleichzeitig jeweils ein über den gekrümmten Spiegel (4) und den verkippbaren Spiegel (12) abgebildetes Bild auf den Detektor (8) abbildbar ist.

11. Weitwinkeloptik (38, 46) nach einem der vorhergehenden Ansprüche,
**dadurch gekennzeichnet, dass** der verkippbare Spiegel (12) als Abplattung des gekrümmten Spiegels (4) ausgeführt ist.

## Claims

1. Wide-angle optical system (2, 38, 46) having an objective (6) and a curved mirror (4) for projecting a wide-angle image through the objective (6) onto a detector (8), at least one further mirror (12) being provided which is arranged relative to the objective (6) in a fashion capable of being tilted by means of a drive (22, 42) about a tilting axis (24) different from an optical axis (28) of the objective (6), **characterized in that** the curved mirror (4) and the further mirror (12) are rigidly interconnected in such a way that a common tilting of the mirrors (4, 12) about the tilting axis (24) can be carried out, the objective (6)
a) being directed in one position of the two mirrors (4, 12) directly onto the curved mirror (4) in order to project a panoramic image, and
b) is directed in a further tilted position of the two mirrors (4, 12) onto the further tiltable mirror (12) in order to view an interesting section of the panoramic image at higher resolution.

2. Wide-angle optical system (2, 38, 46) according to Claim 1, **characterized in that** the tiltable mirror (12) is a plane mirror.

3. Wide-angle optical system (2, 38, 46) according to Claim 1 or 2, **characterized in that** the tiltable mirror (12) can be rotated about a further axis (28) different from the tilting axis (24).

4. Wide-angle optical system (2, 38, 46) according to one of the preceding claims, **characterized in that** the curved mirror (4) and the tiltable mirror (12) are arranged in a jointly movable fashion on a component (10, 40, 48).

5. Wide-angle optical system (2, 38, 46) according to one of the preceding claims, **characterized in that** the curved mirror (4) is arranged on a front side, and the tiltable mirror (12) is arranged on a rear side, averted from the front side, of a component (10, 40, 48).

6. Wide-angle optical system (2, 46) according to Claim 5, **characterized by** a suspension (14) by means of which the component (10, 48) can be tilted in a fashion at least largely free of unbalance.

7. Wide-angle optical system (2, 46) according to one of Claims 4 to 6, **characterized in that** the component (10, 48) is a plastic block.

8. Wide-angle optical system (2) according to one of Claims 4 to 7, **characterized by** a spacer element (36) which spaces the tiltable mirror (12) from the curved mirror (4) in an axial direction.

9. Wide-angle optical system (2, 38) according to one of the preceding claims, **characterized by** a drive (22) by means of which the tiltable mirror (12) and the curved mirror (4) can be mutually exchanged.

10. Wide-angle optical system (46) according to one of the preceding claims, **characterized in that** a respective image projected via the curved mirror (4) and the tiltable mirror (12) can simultaneously be projected onto the detector (8) via the objective (6).

11. Wide-angle optical system (38, 46) according to one of the preceding claims, **characterized in that** the tiltable mirror (12) is designed as flattening of the curved mirror (4).

## Revendications

1. Optique à grand angle (2, 38, 46) comprenant un objectif (6) et un miroir courbe (4) pour représenter une image à grand angle à travers l'objectif (6) sur un détecteur (8), au moins un miroir supplémentaire (12) étant prévu, lequel est disposé de manière à pouvoir basculer au moyen d'un mécanisme d'entraînement (22, 42) par rapport à l'objectif (6) autour d'un axe de basculement (24) différent de l'axe optique (28) de l'objectif (6), **caractérisée en ce que** le miroir courbe (4) et le miroir supplémentaire (12) sont reliés de manière rigide l'un à l'autre de telle sorte qu'il est possible de réaliser un basculement commun du miroir (4, 12) autour de l'axe de basculement (24), l'objectif (6) étant dirigé
a) dans une position des deux miroirs (4, 12) directement sur le miroir courbe (4) pour former une image panoramique et
b) dans une autre position de basculement des deux miroirs (4, 12) sur le miroir supplémentaire basculant (12) pour observer une portion intéressante de l'image panoramique avec une résolution plus élevée.

2. Optique à grand angle (2, 38, 46) selon la revendication 1, **caractérisée en ce que** le miroir basculant (12) est un miroir plan.

3. Optique à grand angle (2, 38, 46) selon la revendication 1 ou 2, **caractérisée en ce que** le miroir basculant (12) peut tourner autour d'un axe supplémentaire (28) différent de l'axe de basculement (24).

4. Optique à grand angle (2, 38, 46) selon l'une des revendications précédentes, **caractérisée en ce que** le miroir courbe (4) et le miroir basculant (12) sont disposés sur un composant (10, 40, 48) de manière à pouvoir bouger ensemble.

5. Optique à grand angle (2, 38, 46) selon l'une des revendications précédentes, **caractérisée en ce que** le miroir courbe (4) est disposé sur une face avant et le miroir basculant (12) sur une face arrière d'un composant (10, 40, 48) à l'opposé de la face avant.

6. Optique à grand angle (2, 46) selon la revendication 5, **caractérisée par** une suspension (14) par le biais de laquelle le composant (10, 48) peut basculer au moins en grande partie sans déséquilibre.

7. Optique à grand angle (2, 46) selon l'une des revendications 4 à 6, **caractérisée en ce que** le composant (10, 48) est un bloc en matière plastique.

8. Optique à grand angle (2) selon l'une des revendications 4 à 7, **caractérisée par** un élément d'espacement (36) qui tient le miroir basculant (12) espacé du miroir courbe (4) dans le sens axial.

9. Optique à grand angle (2, 38) selon l'une des revendications précédentes, **caractérisée par** un mécanisme d'entraînement (22) par le biais duquel le miroir basculant (12) et le miroir courbe (4) peuvent être remplacés l'un par l'autre.

10. Optique à grand angle (46) selon l'une des revendications précédentes, **caractérisée en ce qu'**une image représentée par le biais du miroir courbe (4) et du miroir basculant (12) peut à chaque fois être représentée simultanément sur le détecteur (8) par le biais de l'objectif (6).

11. Optique à grand angle (38, 46) selon l'une des revendications précédentes, **caractérisée en ce que** le miroir basculant (12) est réalisé sous la forme d'un aplatissement du miroir courbe (4).
